# EUROPEAN PATENT APPLICATION

(11) **EP 4 604 273 A1**
(43) Date of publication of application: **20.08.2025**
(21) Application number: 24218364.8
(22) Date of filing: 09.12.2024
(51) Int. Cl.: H01M 10/6566, H01M 10/6557, H01M 50/291

(54) **BATTERY MODULE**

(30) Priority: 13.02.2024 JP 2024019338
(71) Applicant: Prime Planet Energy & Solutions, Inc., Chuo-ku, Tokyo 103-0022 (JP)
(72) Inventor: ABE, Kosyo, Tokyo, 103-0022 (JP); TAKEDA, Takahide, Tokyo, 103-0022 (JP)
(74) Representative: Kuhnen & Wacker Patent- und Rechtsanwaltsbüro PartG mbB

(57) **Abstract**

A first supporting portion (211) and a second supporting portion (221) sandwich one battery cell (101) of a plurality of battery cells (100) in a first direction. The first supporting portion (211) includes a plurality of first protrusions (270). Each of the plurality of first protrusions (270) protrudes with respect to a first main surface portion (213) in the first direction and extends in the form of a strip along a second direction orthogonal to the first direction. The second supporting portion (221) includes a plurality of second protrusions (280). Each of the plurality of second protrusions (280) protrudes with respect to a second main surface portion (222) in the first direction. When viewed in the first direction, each of the plurality of second protrusions (280) extends in the form of a strip so as not to overlap with the plurality of first protrusions (270), or extends in the form of a strip along a third direction different from the second direction.

## Description

### CROSS REFERENCE TO RELATED APPLICATIONS

This nonprovisional application is based on Japanese Patent Application No. 2024-019338 filed on February 13, 2024 with the Japan Patent Office, the entire contents of which are hereby incorporated by reference.

### BACKGROUND OF THE INVENTION

### Field of the Invention

The present technology relates to a battery module.

### Description of the Background Art

Japanese Patent Laying-Open No. 2023-074271 is a prior art document that discloses a configuration of a battery module. The battery module described in Japanese Patent Laying-Open No. 2023-074271 includes battery cells and a supporting member. The supporting member includes a side wall portion and a partition wall portion. Each of the battery cells is sandwiched between the side wall portion and the partition wall portion in a stacking direction of the battery cells. The side wall portion is provided with protuberance portions. The partition wall portion is provided with ribs. A part of the protuberance portions of the side wall portion and the ribs of the partition wall portion extend in the same direction in a direction orthogonal to the stacking direction of the battery cells. The part of the protuberance portions of the side wall portion and a part of the ribs of the partition wall portion are disposed to overlap with each other in the stacking direction of the battery cells.

### SUMMARY OF THE INVENTION

In the battery module described in Japanese Patent Laying-Open No. 2023-074271, a region to which pressing forces of the supporting portion are applied from both sides beside a battery cell is present in one cross section of the battery cell along the stacking direction of the battery cells. When the battery cell is compressed by the pressing forces, a flow path for electrolyte solution in the battery cell becomes narrow, with the result that the electrolyte solution may be less likely to flow. Therefore, reliability of the battery module is required to be improved by facilitating the electrolyte solution to flow in the battery cell.

The present technology has been made to solve the above-described problem, and has an object to provide a battery module having high reliability so as to facilitate an electrolyte solution to flow in a battery cell.

The present technology provides the following battery module.
[1] A battery module comprising:
   a plurality of battery cells arranged side by side in a first direction and each having a prismatic shape; and
   a first supporting portion and a second supporting portion that sandwich one battery cell of the plurality of battery cells in the first direction, wherein
   the battery cell includes a first side surface portion and a second side surface portion facing each other in the first direction,
   the first supporting portion includes
      a first main surface portion located on the first side surface portion side of the battery cell in the first direction, and
      a plurality of first protrusions each protruding with respect to the first main surface portion in the first direction and each extending in a form of a strip along a second direction orthogonal to the first direction,
   the second supporting portion includes
      a second main surface portion located on the second side surface portion side of the battery cell in the first direction, and
      a plurality of second protrusions each protruding with respect to the second main surface portion in the first direction, and
   when viewed in the first direction, each of the plurality of second protrusions extends in a form of a strip so as not to overlap with the plurality of first protrusions or extends in a form of a strip along a third direction different from the second direction.
[2] The battery module according to [1], wherein the second direction and the third direction are orthogonal to each other.
[3] The battery module according to [1] or [2], further comprising a plurality of cases, each of the plurality of cases accommodating at least two battery cells of the plurality of battery cells, each of the plurality of cases supporting the at least two battery cells in at least the first direction, each of the plurality of cases forming a unit including the at least two battery cells, wherein
   each of the plurality of cases includes the first supporting portion and the second supporting portion.
[4] The battery module according to [3], wherein
   each of the cases has a first wall portion located at a position other than an end portion of the case in the first direction, a second wall portion located at the end portion of the case in the first direction, and a third wall portion that connects the first wall portion and the second wall portion in the first direction,
   the first supporting portion is provided at the first wall portion and the second supporting portion is provided at the second wall portion, and
   a cooling medium path along the second direction is formed between the plurality of first protrusions, and
   a through hole is provided to extend through the third wall portion and communicate with the cooling medium path.
[5] The battery module according to [4], wherein
   each of the plurality of first protrusions protrudes toward the first side surface portion with respect to the first main surface portion, and
   each of the plurality of second protrusions protrudes, toward a side opposite to the second side surface portion, with respect to the second main surface portion.
[6] The battery module according to [4] or [5], wherein a cross sectional area of the cooling medium path when viewed in the second direction is larger than a cross sectional area of a space between the plurality of second protrusions when viewed in the third direction.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a configuration of a battery module according to a first embodiment of the present technology.
Fig. 2 is a perspective view showing an internal configuration of the battery module according to the first embodiment of the present technology.
Fig. 3 is a perspective view showing a configuration of a unit included in the battery module according to the first embodiment of the present technology.
Fig. 4 is a perspective view of the unit of Fig. 3 when viewed in a direction of an arrow IV.
Fig. 5 is a perspective view showing a configuration of each battery cell according to the first embodiment of the present technology.
Fig. 6 is a cross sectional view of the unit of Fig. 3 when viewed in a direction of arrows of a line VI-VI.
Fig. 7 is a cross sectional view of the unit of Fig. 3 when viewed in a direction of arrows of a line VII-VII.
Fig. 8 is a schematic diagram showing a positional relation between a plurality of first protrusions and a plurality of second protrusions according to the first embodiment of the present technology.
Fig. 9 is a schematic diagram showing a positional relation between a plurality of first protrusions and a plurality of second protrusions according to a comparative example.
Fig. 10 is a schematic diagram showing a positional relation among the plurality of first protrusions, the plurality of second protrusions, and an electrode assembly according to the first embodiment of the present technology.
Fig. 11 is a schematic diagram showing a positional relation between a plurality of first protrusions and a plurality of second protrusions according to a second embodiment of the present technology.
Fig. 12 is a schematic diagram showing a positional relation between a plurality of first protrusions and a plurality of second protrusions according to a third embodiment of the present technology.
Fig. 13 is a schematic diagram showing a positional relation between a plurality of first protrusions and a plurality of second protrusions according to a fourth embodiment of the present technology.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium ion battery. In the present specification, the term "electrode" may collectively represent a positive electrode and a negative electrode.

Further, the "battery module" can be mounted on vehicles such as a hybrid electric vehicle (HEV), a plug-in hybrid electric vehicle (PHEV), and a battery electric vehicle (BEV). It should be noted that the use of the "battery module" is not limited to the use in a vehicle.

It should be noted that in each of the figures, an X direction is defined as a direction in which a positive electrode terminal and a negative electrode terminal of a battery cell are arranged side by side, a Y direction is defined as a direction in which a plurality of battery cells are stacked, and a Z direction is defined as a direction in which an upper surface portion and a lower surface portion of a housing of each battery cell face each other. In order to facilitate understanding of the present technology, the size of each configuration in the figures may be illustrated to be changed from its actual size.

### (First Embodiment)

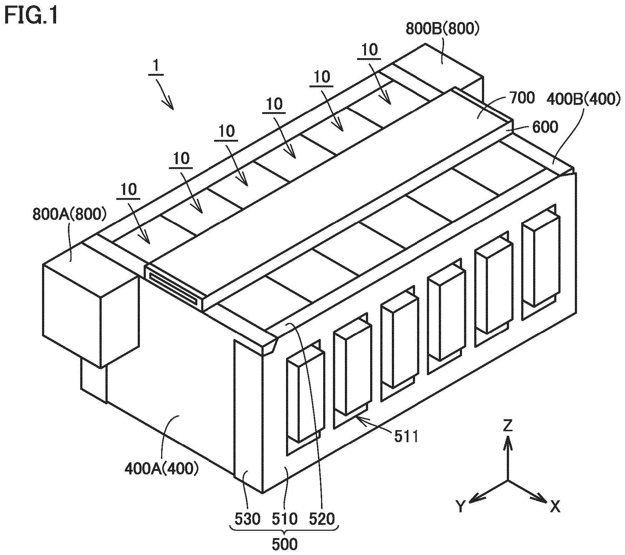

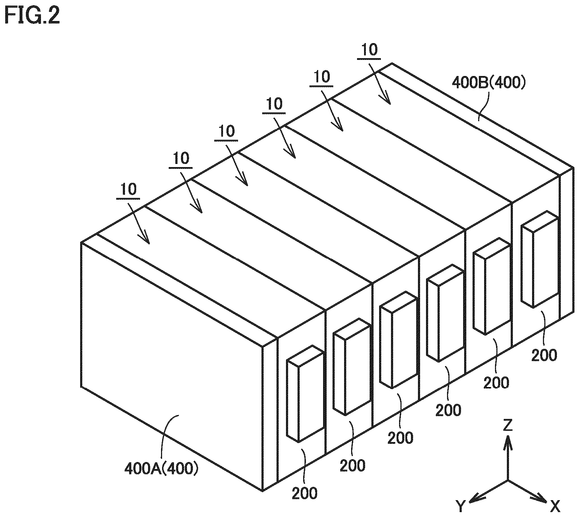

Fig. 1 is a perspective view showing a configuration of a battery module according to a first embodiment of the present technology. Fig. 2 is a perspective view showing an internal configuration of the battery module according to the first embodiment of the present technology.

First, an overall structure of a battery module 1 will be described. As shown in Figs. 1 and 2, battery module 1 according to the first embodiment of the present technology includes a plurality of units 10, end plates 400, restraint members 500, a duct 600, a wiring member 700, and connection terminal portions 500.

The plurality of units 10 are arranged side by side in the first direction (Y direction). Six units 10 are arranged side by side in the first direction (Y direction) as the plurality of units 10 according to the present embodiment. It should be noted that the number of the plurality of units 10 is not particularly limited as long as two or more units 10 are included. The number of the plurality of units may be 18, for example.

The plurality of units 10 are sandwiched between two end plates 400 in the first direction (Y direction). The plurality of units 10 according to the present embodiment are pressed by one end plate 400A and other end plate 400B, and are restrained between two end plates 400A, 400B.

End plates 400 are provided at the both ends beside the plurality of units 10 in the first direction (Y direction). Each of end plates 400 is fixed to a base such as a pack case that accommodates battery module 1. End plate 400 is composed of, for example, aluminum, aluminum alloy, iron, or iron alloy.

Restraint members 500 are provided on both ends beside the plurality of units 10 and end plates 400 in the X direction. When restraint members 500 are engaged with end plates 400 with compressive force in the first direction (Y direction) being applied to the plurality of units 10 arranged side by side and to end plates 400 and then the compressive force is released, tensile force acts on restraint members 500 that connect two end plates 400. As a reaction thereto, restraint members 500 press two end plates 400 in directions of bringing them closer to each other. As a result, restraint members 500 restrain the plurality of units 10 in the first direction (the Y direction).

Each of restraint members 500 includes a plate-shaped portion 510, a first flange portion 520, and second flange portions 530. Restraint member 500 is composed of iron or iron alloy, for example.

Plate-shaped portion 510 is a member extending in the first direction (Y direction). Plate-shaped portion 510 is provided with a plurality of openings 511. The plurality of openings 511 are provided at intervals in the first direction (Y direction). Each of openings 511 is constituted of a through hole extending through plate-shaped portion 510 in the X direction.

First flange portion 520 extends from beside the side surfaces of the plurality of units 10 in the X direction so as to be located over the upper surfaces of the plurality of units 10. By providing first flange portion 520, rigidity of restraint member 500 formed to be relatively thin can be secured.

Second flange portions 530 are connected to both ends of plate-shaped portion 510 in the first direction (Y direction). Second flange portions 530 are fixed to end plates 400. Second flange portions 530 are fixed to end plates 400 by a known fixing method such as fastening of bolt, for example. Thus, restraint members 500 connect two end plates 400 to each other.

Duct 600 is configured to permit gas to flow therein. As shown in Fig. 1, duct 600 extends in the first direction (Y direction). Duct 600 extends at a position overlapping with wiring member 700 when viewed in the Z direction. Duct 600 is disposed between each of the plurality of units 10 and wiring member 700 in the Z direction.

Wiring member 700 is provided mainly to detect voltage of a battery cell 100 described later. Wiring member 700 is provided at a position facing the plurality of units 10 in the Z direction. Wiring member 700 extends in the Y direction to pass through the central portion of each of the plurality of units 10 in the X direction. Wiring member 700 is electrically connected to the plurality of units 10. Wiring member 700 is, for example, a flexible printed circuit board.

Connection terminal portions 800 are arranged on both sides beside the plurality of units 10 arranged side by side in the first direction (Y direction). Connection terminal portions 800 are fixed to end plates 400. Connection terminal portion 800 has a negative side connection terminal portion 800A and a positive side connection terminal portion 800B. Each of connection terminal portions 800 forms a path for electric connection between battery module 1 and a driving source or the like disposed outside battery module 1.

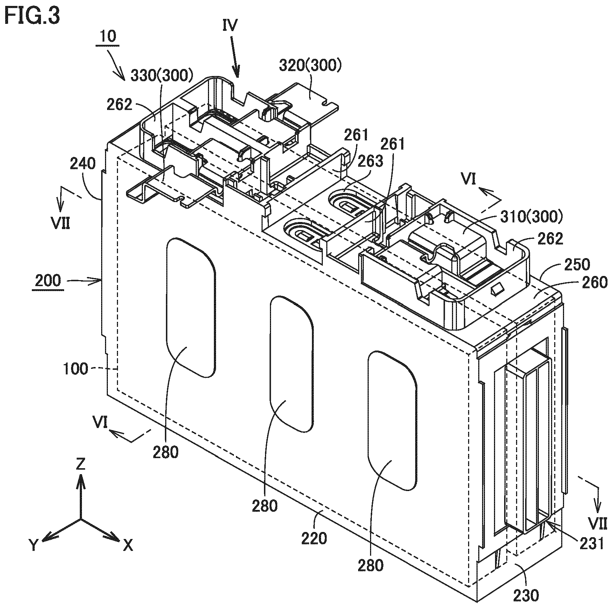

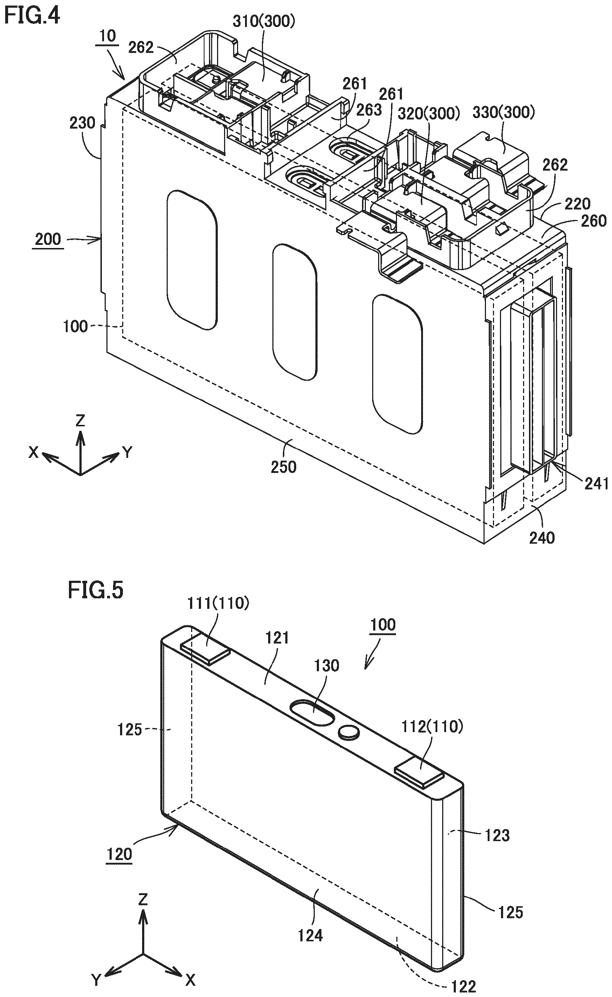

Next, a structure of unit 10 will be described. Fig. 3 is a perspective view showing a configuration of the unit included in the battery module according to the first embodiment of the present technology. Fig. 4 is a perspective view of the unit of Fig. 3 when viewed in a direction of an arrow IV. Fig. 5 is a perspective view showing a configuration of each battery cell according to the first embodiment of the present technology.

As shown in Figs. 3 to 5, each of the plurality of units 10 includes a plurality of battery cells 100, a case 200, and bus bars 300.

Unit 10 includes two or more battery cells 100. Unit 10 according to the present embodiment includes two battery cells 100 as an even number of battery cells 100. It should be noted that the number of battery cells 100 included in each of the plurality of units 10 is not particularly limited as long as two or more battery cells 100 are included. Moreover, an odd number of battery cells 100 may be included in each of the plurality of units 10. The total number of battery cells 100 in battery module 1 is, for example, 12 or 36.

The plurality of battery cells 100 are arranged side by side in the first direction (Y direction). As shown in Figs. 1 and 3, the arrangement direction of the plurality of units 10 is the same as the arrangement direction of the plurality of battery cells 100 in each of the plurality of units 10.

As shown in Fig. 5, battery cell 100 is, for example, a lithium ion battery. Battery cell 100 has a prismatic shape.

Battery cell 100 according to the present embodiment has electrode terminals 110, a housing 120, and a gas-discharge valve 130.

Electrode terminals 110 are formed on housing 120. Electrode terminals 110 have a positive electrode terminal 111 and a negative electrode terminal 112 as two electrode terminals 110 arranged side by side along the X direction.

Positive electrode terminal 111 and negative electrode terminal 112 are provided to be separated from each other in the X direction. Positive electrode terminal 111 and negative electrode terminal 112 are provided on both sides beside duct 600 and wiring member 700 in the X direction.

Housing 120 has a rectangular parallelepiped shape, and forms an external appearance of battery cell 100. An electrode assembly 140 described below and an electrolyte solution described below are accommodated in housing 120.

Housing 120 has an upper surface portion 121, a lower surface portion 122, a first side surface portion 123, a second side surface portion 124, and third side surface portions 125.

Upper surface portion 121 is a flat surface orthogonal to the Z direction. Electrode terminals 110 are disposed on upper surface portion 121. Upper surface portion 121 is covered with a below-described upper wall portion 260 of case 200. Lower surface portion 122 faces upper surface portion 121 along the Z direction.

Each of first side surface portion 123 and second side surface portion 124 is constituted of a flat surface orthogonal to the Y direction. First side surface portion 123 and second side surface portion 124 face each other in the first direction (Y direction). Each of first side surface portion 123 and second side surface portion 124 has the largest area among the areas of the plurality of side surfaces of housing 120. Each of first side surface portion 123 and second side surface portion 124 has a rectangular shape when viewed in the Y direction. Each of first side surface 123 and second side surface 124 has a rectangular shape in which the X direction corresponds to the long-side direction and the Z direction corresponds to the short-side direction when viewed in the Y direction.

The pair of third side surface portions 125 are provided in battery cell 100.

The pair of third side surface portions 125 are arranged side by side in the X direction. Each of the pair of third side surface portions 125 connects the end portions of first side surface portion 123 and second side surface portion 124. The pair of third side surface portions 125 are disposed to face below-described third wall portions 230, 240 of case 200 in the X direction.

The plurality of battery cells 100 are stacked such that first side surface portions 123 of battery cells 100, 100 adjacent to each other in the Y direction face each other and second side surface portions 124 of battery cells 100, 100 adjacent to each other in the Y direction face each other. Thus, positive electrode terminals 111 and negative electrode terminals 112 are alternately arranged in the Y direction in which the plurality of battery cells 100 are stacked.

Gas-discharge valve 130 is provided in upper surface portion 121. When internal pressure of housing 120 becomes more than or equal to a predetermined value due to gas generated inside housing 120, gas-discharge valve 130 discharges the gas to the outside of housing 120. The gas from gas-discharge valve 130 flows through duct 600 in Fig. 1 and is discharged to the outside of battery module 1.

As shown in Figs. 3 and 4, case 200 has an external appearance with a rectangular parallelepiped shape. Case 200 accommodates at least two battery cells 100 of the plurality of battery cells 100. In the present embodiment, case 200 accommodates two battery cells 100.

Case 200 is composed of, for example, a resin such as polypropylene. Case 200 is formed by, for example, injection molding. As shown in Figs. 1 to 2, case 200 is compressed in the first direction (Y direction) by restraint members 500 when assembled to battery module 1.

Each of the plurality of bus bars 300 is composed of an electric conductor. The plurality of bus bars 300 electrically connect the plurality of battery cells 100 together.

The plurality of bus bars 300 include a first bus bar 310, a second bus bar 320, and a third bus bar 330. First bus bar 310 electrically connects electrode terminals 110 of battery cells 100 accommodated in one unit 10. Each of second bus bar 320 and third bus bar 330 electrically connects electrode terminals 110 of battery cell 100 of one unit 10 and battery cell 100 of another unit 10 adjacent thereto.

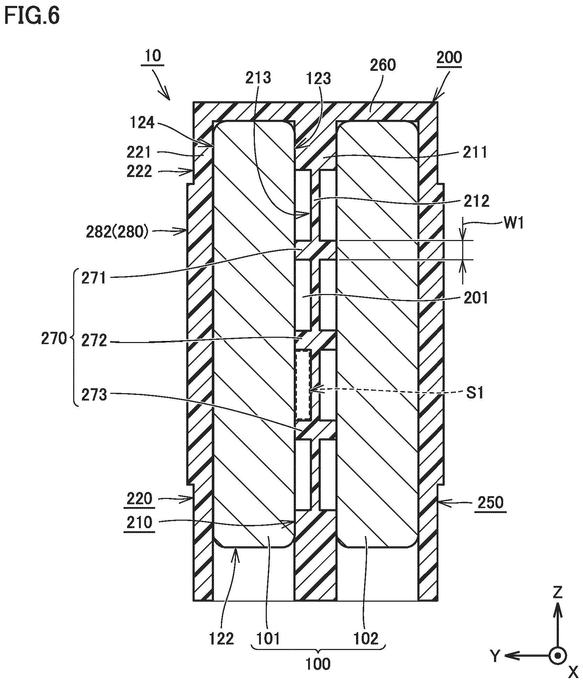

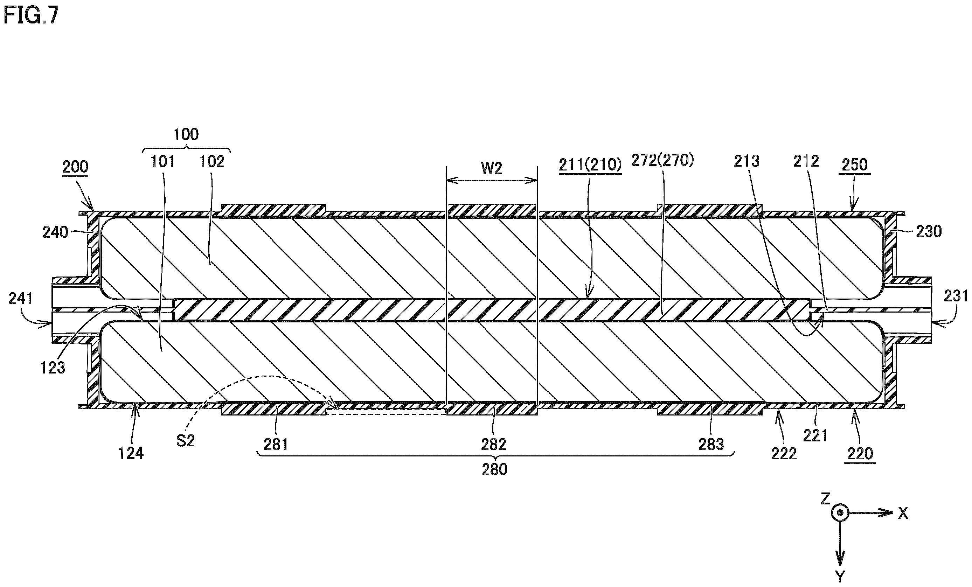

Next, a detailed structure of case 200 will be described. Fig. 6 is a cross sectional view of the unit of Fig. 3 when viewed in a direction of arrows of a line VI-VI. Fig. 7 is a cross sectional view of the unit of Fig. 3 when viewed in a direction of arrows of a line VII-VII.

As shown in Figs. 3, 4, 6 and 7, case 200 is constituted of a single member. Case 200 has a first wall portion 210, a second wall portion 220, a pair of third wall portions 230, 240, a fourth wall portion 250, and an upper wall portion 260.

First wall portion 210 is located at a position other than an end portion of case 200 in the first direction (Y direction). First wall portion 210 is located substantially at the center of case 200 in the first direction (Y direction). First wall portion 210 is located between two battery cells 101, 102 to insulate two battery cells 101, 102 from each other. First wall portion 210 is connected to the pair of third wall portions 230, 240 and upper wall portion 260.

Second wall portion 220 is located at an end portion of case 200 on one side in the first direction (Y direction).

The pair of third wall portions 230, 240 are arranged side by side in the X direction. Each of the pair of third wall portions 230, 240 connects second wall portion 220 and fourth wall portion 250.

One third wall portion 230 is adjacent to one restraint member 500. One third wall portion 230 connects first wall portion 210 and second wall portion 220 in the first direction (Y direction).

As shown in Figs. 3 and 7, one third wall portion 230 is provided with a first through hole 231. First through hole 231 extends through one third wall portion 230 and communicates with a cooling medium path 201 described later. First through hole 231 is provided at a portion protruding to the one restraint member 500 side with respect to one third wall portion 230. The portion provided with first through hole 231 is inserted in opening 511 of restraint member 500.

Other third wall portion 240 faces one third wall portion 230 with the plurality of battery cells 100 being interposed therebetween in the X direction. Other third wall portion 240 connects first wall portion 210 and second wall portion 220 in the first direction (Y direction).

As shown in Figs. 4 and 7, other third wall portion 240 is provided with a second through hole 241. Second through hole 241 extends through other third wall portion 240 and communicates with cooling medium path 201 described later. Second through hole 241 is provided at a portion protruding to the other restraint member 500 side with respect to other third wall portion 240. The portion provided with second through hole 241 is inserted in opening 511 of restraint member 500.

Fourth wall portion 250 is arranged side by side with and face second wall portion 220 in the first direction (Y direction) with first wall portion 210 being interposed therebetween. Fourth wall portion 250 is located at an end portion of case 200 on the other side in the first direction (Y direction).

As shown in Figs. 3 and 4, upper wall portion 260 includes first partition walls 261, second partition walls 262, and a plurality of holes 263. Two first partition walls 261 are formed in parallel at the central portion in the X direction so as to extend in the Y direction. Second partition walls 262 are provided on both sides with respect to first partition walls 261 in the X direction, and partitions installation locations for bus bars 300. The plurality of holes 263 are provided to expose electrode terminals 110 and gas-discharge valves 130 from upper wall portion 260. The plurality of holes 263 communicate with gas-discharge valves 130.

As shown in Fig. 6, case 200 is not provided with a bottom wall portion facing lower surface portions 122 of battery cells 100. Therefore, battery cells 100 can be accommodated with battery cells 100 being covered with case 200 from above. Unit 10 can stand by itself in a state in which case 200 is placed with upper wall portion 260 facing upward.

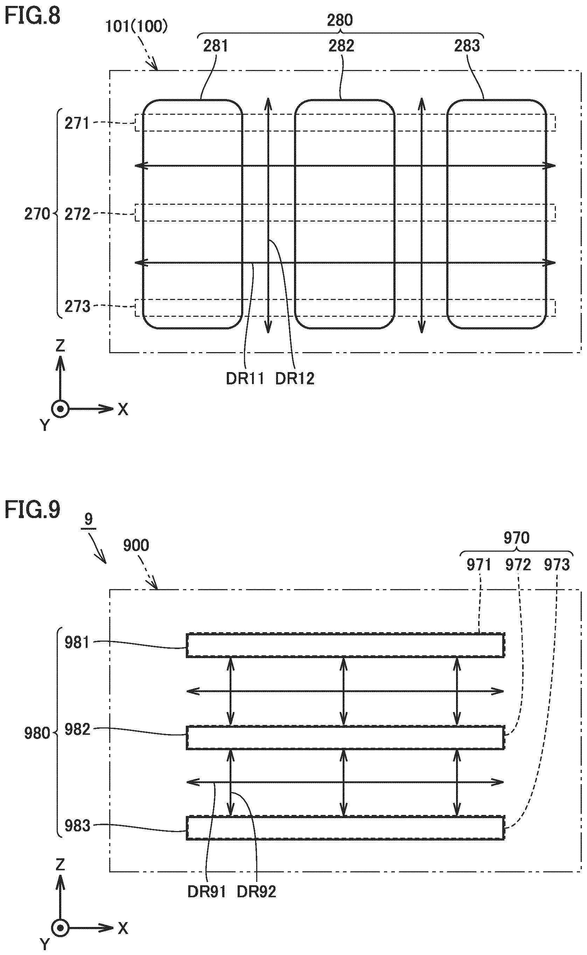

Next, a structure to support battery cells 100 by case 200 will be described. Fig. 8 is a schematic diagram showing a positional relation between a plurality of first protrusions and a plurality of second protrusions according to the first embodiment of the present technology.

As shown in Figs. 6 to 8, case 200 supports two battery cells 100 in at least the first direction (Y direction). Case 200 supports two battery cells 100 in the Y direction and the X direction.

Case 200 can sandwich two battery cells 100 in the first direction (Y direction) in a state in which no load is applied from another constituent member in the first direction (Y direction). Case 200 sandwiches battery cells 100 in the first direction (Y direction) using first wall portion 210, second wall portion 220, and fourth wall portion 250.

One battery cell 101 is sandwiched between first wall portion 210 and second wall portion 220. On the other hand, other battery cell 102 is sandwiched between first wall portion 210 and fourth wall portion 250. In the Y direction, each of a clearance between first wall portion 210 and second wall portion 220 and a clearance between first wall portion 210 and fourth wall portion 250 is the same as or narrower than the width of battery cell 100.

Each of the plurality of cases 200 includes a first supporting portion 211 and a second supporting portion 221. First supporting portion 211 is provided at first wall portion 210. Second supporting portion 221 is provided at second wall portion 220. First supporting portion 211 and second supporting portion 221 are portions overlapping at least with battery cell 100 in the first direction (Y direction). First supporting portion 211 and second supporting portion 221 sandwich one battery cell 101 in the first direction (Y direction).

It should be noted that the first supporting portion may constitute a part of the first wall portion, or the first supporting portion may constitute a whole of the first wall portion. Further, the second supporting portion may constitute a part of the second wall portion, or the second supporting portion may constitute a whole of the second wall portion.

First supporting portion 211 includes thin portions 212, a first main surface portion 213, and a plurality of first protrusions 270.

Each of thin portions 212 is a portion of first wall portion 210 that has a thickness thinner than each of those of the other portions of first wall portion 210 in the Y direction. Thin portion 212 is provided to form a large cross sectional area of cooling medium path 201 described later.

First main surface portion 213 is located on the first side surface portion 123 side of one battery cell 101 in the first direction (Y direction). First main surface portion 213 mainly constitutes an outer surface of thin portion 212 of first supporting portion 211.

Each of the plurality of first protrusions 270 protrudes with respect to first main surface portion 213 in the first direction (Y direction). Each of the plurality of first protrusions 270 protrudes toward first side surface portion 123 with respect to first main surface portion 213.

The plurality of first protrusions 270 are arranged at intervals in the Z direction. In the present embodiment, the plurality of first protrusions 270 are constituted of three first protrusions 271, 272, 273. It should be noted that the number of the plurality of first protrusions 270 is not limited to three.

Each of the plurality of first protrusions 270 extends in the form of a strip along a second direction orthogonal to the first direction (Y direction). Each of the plurality of first protrusions 270 in the present embodiment extends in the form of a strip along the X direction serving as the second direction.

Second supporting portion 221 has a second main surface portion 222 and a plurality of second protrusions 280.

Second main surface portion 222 is located on the second side surface portion 124 side of one battery cell 101 in the first direction (Y direction).

Each of the plurality of second protrusions 280 protrudes with respect to second main surface portion 222 in the first direction (Y direction). Each of the plurality of second protrusions 280 protrudes, toward a side opposite to second side surface portion 124, with respect to second main surface portion 222. In the present embodiment, the plurality of second protrusions 280 are constituted of three second protrusions 281, 282, 283. It should be noted that the number of the plurality of second protrusions 280 is not limited to three.

Each of the plurality of second protrusions 280 extends in the form of a strip along a third direction different from the second direction (X direction) when viewed in the first direction (Y direction). Each of the plurality of second protrusions 280 in the present embodiment extends in the form of a strip along the Z direction serving as the third direction.

The second direction and the third direction are orthogonal to each other. In the present embodiment, since the second direction is the X direction and the third direction is the Z direction, the second direction and the third direction are orthogonal to each other.

Cooling medium paths 201 along the second direction (X direction) are formed between the plurality of first protrusions 270. Thus, battery cells 100 accommodated in case 200 can be cooled by introducing cooling air from first through hole 23 1 or second through hole 241 so as to allow the cooling air to flow in cooling medium paths 201.

As shown in Figs. 6 and 7, a cross sectional area S 1 of each cooling medium path 201 when viewed in the second direction (X direction) is larger than a cross sectional area S2 of each space between the plurality of second protrusions 280 when viewed in the third direction (Z direction). Thus, a large amount of cooling medium can be introduced into cooling medium path 201 as compared with the space between the plurality of second protrusions 280.

A width W1 of each of the plurality of first protrusions 270 in the third direction (Z direction) when viewed in the second direction (X direction) is narrower than a width W2 of each of the plurality of second protrusions 280 in the second direction (X direction) when viewed in the third direction (Z direction). Thus, cross sectional area S1 of cooling medium path 201 can be secured to be larger than cross sectional area S2 of the space between the plurality of second protrusions 280.

As described above, the plurality of first protrusions 270 have: a function as a load path to transmit a pressing force to battery cell 100 when supporting battery cell 100 by case 200; and a function of forming cooling medium path 201 to cool battery cell 100. The plurality of second protrusions 280 have a function as a load path to transmit a pressing force to battery cell 100 when supporting battery cell 100 by case 200.

As with first wall portion 210 and second wall portion 220 that sandwich one battery cell 101, first wall portion 210 and fourth wall portion 250 that sandwich other battery cell 102 are also each provided with a plurality of protrusions.

Here, a battery module according to a comparative example will be described. Since the battery module according to the comparative example is different from battery module 1 according to the first embodiment of the present technology in terms of the configurations of the plurality of first protrusions in the first supporting portion and the plurality of second protrusions in the second supporting portion, the same configurations as those of battery module 1 according to the first embodiment of the present technology will not be described repeatedly.

Fig. 9 is a schematic diagram showing a positional relation between the plurality of first protrusions and the plurality of second protrusions according to the comparative example. As shown in Fig. 9, battery module 9 according to the comparative example includes battery cells 900 and a case. The case includes a first supporting portion and a second supporting portion. Each of a plurality of first protrusions 970 protrudes with respect to a first main surface portion of the first supporting portion. Each of a plurality of second protrusions 980 protrudes with respect to a second main surface portion of the second supporting portion.

Each of the plurality of first protrusions 970 extends in the form of a strip along the second direction (X direction). As with each of the plurality of first protrusions 970, each of the plurality of second protrusions 980 extends in the form of a strip along the second direction (X direction).

The plurality of first protrusions 970 and the plurality of second protrusions 980 are disposed to overlap when viewed in the first direction (Y direction). Battery cell 900 is pressed from both sides beside positions at which the plurality of first protrusions 970 and the plurality of second protrusions 980 overlap in the first direction (Y direction). When battery cell 900 is compressed by applying pressing forces of the first supporting portion and the second supporting portion from the both sides beside battery cell 900 in one cross section (XY plane) along the first direction (Y direction), a flow path for electrolyte solution in battery cell 900 becomes narrow.

The electrolyte solution accommodated in battery cell 900 according to the comparative example is moved in a direction (DR91 direction) along the X direction at a region at which the plurality of first protrusions 970 and the plurality of second protrusions 980 do not overlap in the first direction (Y direction). However, since the plurality of first protrusions 970 and the plurality of second protrusions 980 overlap in the first direction (Y direction) to narrow the flow path for electrolyte solution in a direction (DR92 direction) along the Z direction, the electrolyte solution is less likely to be moved.

On the other hand, as shown in Fig. 8, in battery cell 100 according to the first embodiment, a region at which the plurality of first protrusions 270 and the plurality of second protrusions 280 overlap in the first direction (Y direction) is reduced as compared with battery cell 900 according to the comparative example. Therefore, in one cross section (XY plane) along the first direction (Y direction), a region to which the pressing forces of first supporting portion 211 and second supporting portion 221 are applied from both sides beside battery cell 100 is reduced. Thus, the pressing forces to battery cell 100 are distributed, thereby reducing a region at which the flow path for electrolyte solution is narrow in battery cell 100 when battery cell 100 is compressed. As a result, a region at which the electrolyte solution is less likely to be moved in battery cell 100 can be reduced.

Since the flow path for electrolyte solution is secured, the electrolyte solution accommodated in battery cell 100 according to the first embodiment is likely to be moved in a direction (DR11 direction) along the X direction and a direction (DR12 direction) along the Z direction at the region at which the plurality of first protrusions 270 and the plurality of second protrusions 280 do not overlap in the first direction (Y direction).

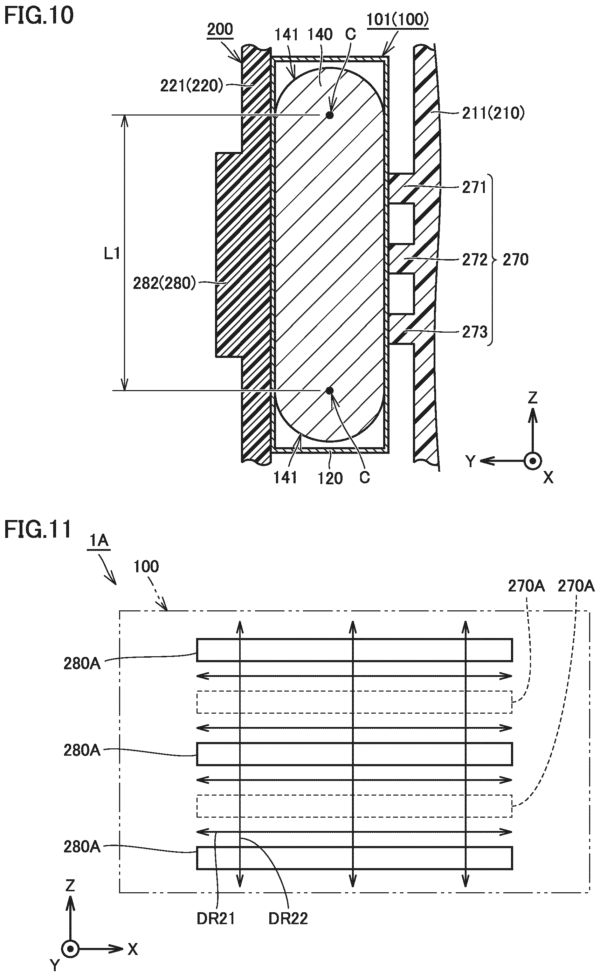

Fig. 10 is a schematic diagram showing a positional relation among the plurality of first protrusions, the plurality of second protrusions, and the electrode assembly according to the first embodiment of the present technology.

As shown in Fig. 10, electrode assembly 140 is disposed inside battery cell 100. Electrode assembly 140 is a wound type electrode assembly. Electrode assembly 140 is wound with respect to the X direction serving as an axial center. Curved portions 141 are formed at end portions at each of which electrode assembly 140 is curved. Curved portion 141 has a curved shape with an imaginary center C serving as a base point.

The plurality of first protrusions 270 and the plurality of second protrusions 280 are provided at positions not overlapping with curved portions 141 of electrode assembly 140 in the first direction (Y direction). The plurality of first protrusions 270 and the plurality of second protrusions 280 are provided within a range of a length L1 that connects respective imaginary centers C of curved portions 141 located at both ends in Z direction. Thus, a pressing force resulting from the supporting by case 200 is suppressed from being applied to each of curved portions 141 of electrode assembly 140. Since the pressing force of case 200 can be applied to a flat portion of electrode assembly 140, electrode assembly 140 can be securely restrained and the electrolyte solution can be facilitated to flow.

In battery module 1 according to the first embodiment of the present technology, the plurality of first protrusions 270 each in the form of a strip and each extending in the second direction (X direction) orthogonal to the stacking direction of battery cells 100 are provided at first supporting portion 211 that supports one surface (first side surface portion 123) of battery cell 100. Further, the plurality of second protrusions 280 each in the form of a strip and each extending in the third direction (Z direction) different from the second direction are provided at second supporting portion 221 that supports the other surface (second side surface portion 124) of battery cell 100. Thus, as compared with a case where the first protrusions and the second protrusions extend in the same direction and overlap in the stacking direction of the battery cells, it is possible to reduce a region at which the plurality of first protrusions 270 and the plurality of second protrusions 280 overlap to sandwich battery cell 100 when viewed in the stacking direction of battery cells 100. Since the pressing forces with which battery cell 100 is sandwiched are distributed, a flow path for electrolyte solution in battery cell 100 can be secured. As a result, the electrolyte solution can be facilitated to flow in battery cell 100, thereby providing battery module 1 having high reliability.

In battery module 1 according to the first embodiment of the present technology, since the second direction (X direction) and the third direction (Z direction) are orthogonal to each other, the electrolyte solution can be facilitated to be moved to the upper, lower, left, and right corners of battery cell 100 while uniformly supporting battery cell 100 by first supporting portion 211 and second supporting portion 221.

In battery module 1 according to the first embodiment of the present technology, since each of the plurality of cases 200 that each form unit 10 including battery cells 100 has first supporting portion 211 and second supporting portion 221, first supporting portion 211 and second supporting portion 221 can be formed in one piece, thereby reducing the number of components of battery module 1.

In battery module 1 according to the first embodiment of the present technology, cooling medium path 201 along the second direction (X direction) is formed between the plurality of first protrusions 270, and the through holes (first through hole 231 and second through hole 241) communicating with cooling medium path 201 are provided, thereby efficiently cooling battery cell 100.

In battery module 1 according to the first embodiment of the present technology, since each of the plurality of first protrusions 270 protrudes toward first side surface portion 123 with respect to first main surface portion 213 and each of the plurality of second protrusions 280 protrudes, toward the side opposite to second side surface portion 124, with respect to second main surface portion 222, the plurality of second protrusions 280 can be disposed at the outer surface of case 200. When case 200 is formed in one piece by resin molding, each configuration of case 200 is a resin-molded portion. In the case where case 200 is formed in one piece by resin molding, a mold for resin molding to form the plurality of second protrusions 280 is readily disposed at the time of manufacturing, with the result that the plurality of second protrusions 280 constituting parts of the resin-molded portions can be readily formed.

In battery module 1 according to the first embodiment of the present technology, since cross sectional area S1 of cooling medium path 201 when viewed in the second direction (X direction) is larger than cross sectional area S2 of the space between the plurality of second protrusions 280 when viewed in the third direction (Z direction), a high capacity of cooling air can flow in cooling medium path 201, thereby efficiently cooling battery cell 100 while battery cell 100 is supported by first supporting portion 211 and second supporting portion 221.

Hereinafter, each of battery modules according to second to fourth embodiments of the present technology will be described. In each of the battery modules according to the second to fourth embodiments of the present technology, since the configurations of the plurality of first protrusions in the first supporting portion and the plurality of second protrusions in the second supporting portion are different from those of battery module 1 according to the first embodiment of the present technology, the same configurations as those of battery module 1 according to the first embodiment of the present technology will not be described repeatedly.

### (Second Embodiment)

Fig. 11 is a schematic diagram showing a positional relation between the plurality of first protrusions and the plurality of second protrusions according to the second embodiment of the present technology.

As shown in Fig. 11, a battery module 1A according to the present embodiment includes battery cells 100, a first supporting portion, and a second supporting portion. Each of a plurality of first protrusions 270A protrudes with respect to a first main surface portion of the first supporting portion. Each of a plurality of second protrusions 280A protrudes with respect to a second main surface portion of the second supporting portion.

Each of the plurality of first protrusions 270A extends in the form of a strip along the second direction (X direction). Each of the plurality of second protrusions 280A extends in the form of a strip so as not to overlap with the plurality of first protrusions 270A when viewed in the first direction (Y direction). Each of the plurality of second protrusions 280A extends in the form of a strip in the second direction (X direction) so as not to overlap with the plurality of first protrusions 270A when viewed in the first direction (Y direction).

In battery cell 100 according to the present embodiment, in one cross section (XY plane) along the first direction (Y direction), there is no region to which the pressing forces of the first supporting portion and the second supporting portion are applied from both sides beside battery cell 100. Thus, a flow path for electrolyte solution in battery cell 100 can be secured. The electrolyte solution is likely to be moved in a direction (DR21 direction) along the X direction and a direction (DR22 direction) along the Z direction at the region at which the plurality of first protrusions 270 and the plurality of second protrusions 280 do not overlap in the first direction (Y direction).

In battery module 1A according to the second embodiment of the present technology, the plurality of first protrusions 270A each in the form of a strip and each extending in the second direction orthogonal to the stacking direction of battery cells 100 are provided at the first supporting portion that supports one surface (first side surface portion) of battery cell 100, and the plurality of second protrusions 280A each in the form of a strip and each not overlapping with the plurality of first protrusions 270A when viewed in the first direction are provided at the second supporting portion that supports the other surface (second side surface portion) of battery cell 100. Thus, since the pressing forces with which battery cell 100 is sandwiched are distributed, a flow path for electrolyte solution in battery cell 100 can be secured. As a result, the electrolyte solution can be facilitated to flow in battery cell 100, thereby providing battery module 1A having high reliability.

In battery module 1A according to the second embodiment of the present technology, since battery cell 100 is alternately pressed oppositely in the Y direction when viewed along the Z direction, battery cell 100 can be securely positioned with respect to the case in the Z direction when battery cell 100 is accommodated in and supported by the case.

### (Third Embodiment)

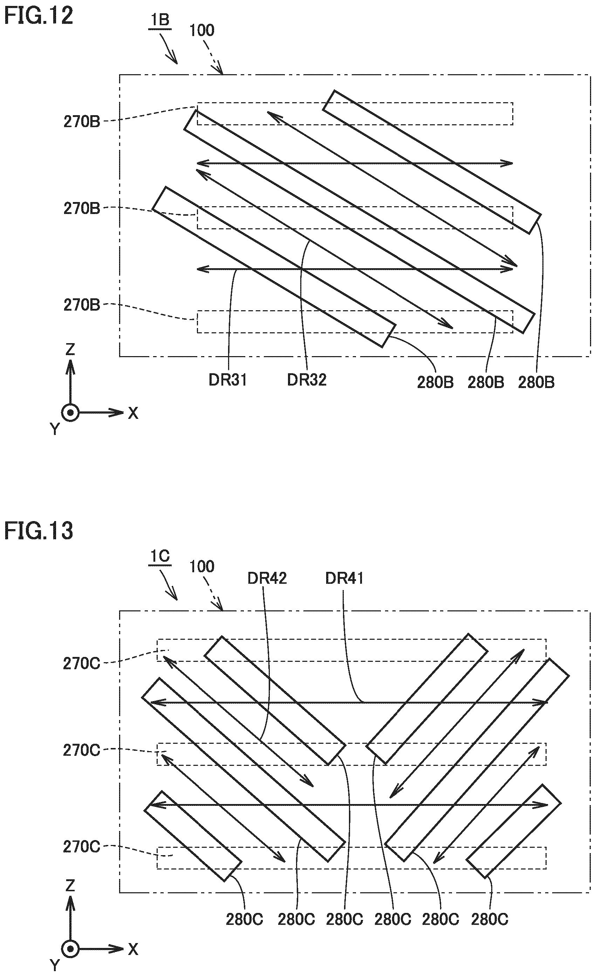

Fig. 12 is a schematic diagram showing a positional relation between the plurality of first protrusions and the plurality of second protrusions according to the third embodiment of the present technology.

As shown in Fig. 12, a battery module 1B according to the present embodiment includes battery cells 100, a first supporting portion, and a second supporting portion. Each of a plurality of first protrusions 270B protrudes with respect to a first main surface portion of the first supporting portion. Each of a plurality of second protrusions 280B protrudes with respect to a second main surface portion of the second supporting portion. Each of the plurality of second protrusions 280B extends to be inclined with respect to the X direction, rather than extending to be orthogonal to the X direction.

The electrolyte solution is likely to be moved in a direction (DR31 direction) along the X direction and a direction (DR32 direction) inclined with respect to the X direction at a region at which the plurality of first protrusions 270B and the plurality of second protrusions 280B do not overlap in the first direction (Y direction).

In battery module 1B according to the third embodiment of the present technology, since each of the plurality of second protrusions 280B is disposed in any direction oblique to the X direction, the electrolyte solution can be facilitated to be moved to a desired position.

### (Fourth Embodiment)

Fig. 13 is a schematic diagram showing a positional relation between the plurality of first protrusions and the plurality of second protrusions according to the fourth embodiment of the present technology.

As shown in Fig. 13, a battery module 1C according to the present embodiment includes battery cells 100, a first supporting portion, and a second supporting portion. Each of a plurality of first protrusions 270C protrudes with respect to a first main surface portion of the first supporting portion. Each of a plurality of second protrusions 280C protrudes with respect to a second main surface portion of the second supporting portion. The plurality of second protrusions 280C are not orthogonal to the X direction, and three of the plurality of second protrusions 280C on the left side extend to be inclined in a direction different from a direction in which three of the plurality of second protrusions 280C on the right side extend to be inclined. The plurality of second protrusions 280C are disposed with a clearance being provided at the central portion of battery cell 100 in the X direction.

The electrolyte solution is likely to be moved in a direction (DR41 direction) along the X direction and a direction (DR42 direction) inclined with respect to the X direction at a region at which the plurality of first protrusions 270C and the plurality of second protrusions 280C do not overlap in the first direction (Y direction).

In battery module 1C according to the fourth embodiment of the present technology, since a pressing force can be avoided from being excessively applied to battery cell 100 at its central portion at which electrode assembly 140 is likely to be expanded, the electrolyte solution can be facilitated to be moved in battery cell 100.

It should be noted that each of the first protrusions may not necessarily extend in the X direction and may extend in any direction in the XZ plane. Further, the electrode assembly disposed in the battery cell is not limited to the wound type electrode assembly, and may be a stacked type electrode assembly.

It should be noted that when at least either of the number of the first protrusions and the number of the second protrusions is one, a pressing force applied from the case to the battery cell is likely to be concentrated. Further, even when one protrusion extends on the XZ plane with the direction of the one protrusion being changed, a region at which the first protrusion(s) and the second protrusion(s) overlap is increased. Therefore, since the plurality of the first protrusions and the plurality of second protrusions are provided in the present embodiment, the region at which the first protrusions and the second protrusions overlap can be reduced as compared with the case where at least either of the number of the first protrusions and the number of the second protrusions is one. As a result, the electrolyte solution in battery cell 100 is facilitated to be moved.

Further, the plurality of second protrusions each extending in the form of a strip so as not to overlap with the plurality of first protrusions when viewed in the first direction and the plurality of second protrusions each extending in the form of a strip along the third direction different from the second direction provide a function of distributing the pressing force on the battery cell so as to facilitate movement of the electrolyte solution in the battery cell.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A battery module (1) comprising:
a plurality of battery cells (100) arranged side by side in a first direction and each having a prismatic shape; and
a first supporting portion (211) and a second supporting portion (221) that sandwich one battery cell (101) of the plurality of battery cells (100) in the first direction, wherein
the battery cell (101) includes a first side surface portion (123) and a second side surface portion (124) facing each other in the first direction,
the first supporting portion (211) includes
a first main surface portion (213) located on the first side surface portion (123) side of the battery cell (101) in the first direction, and
a plurality of first protrusions (270) each protruding with respect to the first main surface portion (213) in the first direction and each extending in a form of a strip along a second direction orthogonal to the first direction,
the second supporting portion (221) includes
a second main surface portion (222) located on the second side surface portion (124) side of the battery cell (101) in the first direction, and
a plurality of second protrusions (280) each protruding with respect to the second main surface portion (222) in the first direction, and
when viewed in the first direction, each of the plurality of second protrusions (280) extends in a form of a strip so as not to overlap with the plurality of first protrusions (270) or extends in a form of a strip along a third direction different from the second direction.

2. The battery module (1) according to claim 1, wherein the second direction and the third direction are orthogonal to each other.

3. The battery module (1) according to claim 1 or 2, further comprising a plurality of cases (200), each of the plurality of cases (200) accommodating at least two battery cells (101, 102) of the plurality of battery cells (100), each of the plurality of cases (200) supporting the at least two battery cells (101, 102) in at least the first direction, each of the plurality of cases (200) forming a unit (10) including the at least two battery cells (101, 102), wherein
each of the plurality of cases (200) includes the first supporting portion (211) and the second supporting portion (221).

4. The battery module (1) according to claim 3, wherein
each of the cases (200) has a first wall portion (210) located at a position other than an end portion of the case (200) in the first direction, a second wall portion (220) located at the end portion of the case (200) in the first direction, and a third wall portion (230, 240) that connects the first wall portion (210) and the second wall portion (220) in the first direction,
the first supporting portion (211) is provided at the first wall portion (210) and the second supporting portion (221) is provided at the second wall portion (220), and
a cooling medium path (201) along the second direction is formed between the plurality of first protrusions (270), and
a through hole (231, 241) is provided to extend through the third wall portion (230, 240) and communicate with the cooling medium path (201).

5. The battery module (1) according to claim 4, wherein
each of the plurality of first protrusions (270) protrudes toward the first side surface portion (123) with respect to the first main surface portion (213), and
each of the plurality of second protrusions (280) protrudes, toward a side opposite to the second side surface portion (124), with respect to the second main surface portion (222).

6. The battery module (1) according to claim 4 or 5, wherein a cross sectional area (S 1) of the cooling medium path (201) when viewed in the second direction is larger than a cross sectional area (S2) of a space between the plurality of second protrusions (280) when viewed in the third direction.
